Europäisches Patentamt

(19) European Patent Office

Office européen des brevets

(11) Numéro de publication: **0 229 788**
**B1**

(12) **FASCICULE DE BREVET EUROPEEN**

(45) Date de publication du fascicule du brevet: 03.10.90

(51) Int. Cl.⁵: **B 61 C 13/04,** B 61 B 5/02, E 01 B 25/00, B 61 L 23/00

(21) Numéro de dépôt: 86904060.0

(22) Date de dépôt: 16.07.86

(86) Numéro de dépôt international:
PCT/CH86/00098

(87) Numéro de publication internationale:
WO 87/00493 29.01.87 Gazette 87/03

(54) INSTALLATION MODULAIRE POUR LE TRANSPORT CONTROLE DE PIECES OU DE PRODUITS.

(30) Priorité: 17.07.85 FR 8511048

(43) Date de publication de la demande:
29.07.87 Bulletin 87/31

(45) Mention de la délivrance du brevet:
03.10.90 Bulletin 90/40

(84) Etats contractants désignés:
AT BE CH DE FR GB IT LI LU NL SE

(56) Documents cités:
EP-A-0 132 934
CH-A- 462 873
DE-B-1 254 171
FR-A-1 524 253
FR-A-2 136 421
FR-E- 93 230
US-A-3 918 367

(73) Titulaire: SYSMO S.A.
12, chemin Rieu
CH-1211 Genève 17 (CH)

(72) Inventeur: HORVATH, Laszlo
51, route de Frontenex
CH-1207 Genève (CH)
Inventeur: MARTIN, Georges
Les Terrasses de Genève
F-74160 Collonges s/Salève (FR)
Inventeur: SCHWEEN, Heiner
An der Höhe 14
D-5270 Gummersbach (DE)

(74) Mandataire: Nithardt, Roland
CABINET ROLAND NITHARDT Attn: Cabinet
MOSER & CIE Rue Edouard Verdan 15
CH-1400 Yverdon-les-Bains (CH)

**Description**

La présente invention concerne une installation modulaire pour le transport contrôlé de pièces ou de produits dans une ligne de fabrication, de montage ou de conditionnement, comprenant un réseau de rails et au moines une palette agencée pour circuler sur ce réseau, dans laquelle ladite palette est autonome et comporte des moyens d'entraînement propres et dans laquelle le réseau de rails comporte plusieurs tronçons indépendants composés d'un premier élément de rail et d'un second élément de rail parallèle au premier.

On connaît différents systèmes de transfert de supports de montage ou de palettes de produits conçus pour circuler sur un réseau de rails. Dans la plupart de ces systèmes, les supports ou palettes mobiles sur les rails sont entraînés par divers mécanismes à chaînes ou à engrenages, et le réseau se présente généralement comme une installation fixe montée de manière quasi définitive, capable d'assumer les fonctions définies par les interventions que doivent subir les pièces ou les produits au cours de leur fabrication, de leur montage ou de leur conditionnement.

Le système décrit par le brevet français publié sous le No FR—A—2 136 421 comporte des chariots autonomes qui transportent leur source d'énergie sous la forme de batteries. Ces chariots sont destinés à se déplacer d'une manière prédéterminée d'un point de départ défini à un point d'arrivée. A partir de l'unité de commande on définit la trajectoire grâce aux aiguillages et le déplacement sur rails des chariots ne peut pas être interrompu en cours de route.

L'inconvénient majeur de ces installations est leur absence de flexibilité. Leur destination est unique et exclusive.

Dans les entreprises où les produits fabriqués subissent des interventions parfaitement définies et immuables, et où les quantités de produits réalisés justifient l'investissement très lourd que représente l'acquisition d'un système de transfert de type connu, ces installations peuvent être considérées comme adaptées à leur utilisation.

Toutefois, on observe dans l'industrie une tendance de plus en plus marquée à la diversification et à la mise en place de petites unités de production ou de montage conçues pour fabriquer des séries de produits relativement petites. Dans les ateliers de montage chargés de la fabrication et de l'assemblage de telles petites séries de pièces, il est impensable d'envisager l'automatisation des opérations au moyen des installations coûteuses connues, exclusivement adaptées à la fabrication d'un seul produit. Dans ces ateliers l'acquisition d'une installation automatisée ne peut être envisagée que si elle est susceptible d'être adaptée rapidement à différentes utilisations, c'est-à-dire si elle présente une flexibilité suffisante qui lui permet à la fois de subir une modification rapide du réseau de rails, c'est-à-dire du circuit suivi par les palettes ou les supports de montage, et une modification rapide des fonctions c'est-à-dire des opérations exécutées sur les pièces pendant leur déplacement sur le réseau.

Ces exigences ne peuvent en aucun cas être remplies par les systèmes connus, ce qui constitue un inconvénient majeur au développement de l'automatisation des opérations de montage des pièces fabriquées en relativement petites séries. La présente invention se propose de pallier les inconvénients mentionnès ci-dessus et de mettre à disposition de l'industrie une installation modulaire à commande informatisée qui permet de concevoir à partir d'un matériel standard, une multitude d'équipements parfaitement adaptés à toutes sortes d'applications, même si ces applications sont limitées dans le temps et doivent être remplacées par d'autres pour lesquelles une adaptation de l'installation s'impose.

Ce but est atteint par l'installation selon l'invention, telle que mentionnée en préambule, caractérisée en ce qu'elle est équipée d'une unité centrale de traitement des données pour élaborer des signaux de commande à transmettre auxdits moyens d'entraînement de ladite palette, et en ce que lesdits premier et second éléments sont conçus pour véhiculer à la fois lesdits signaux de commande et le courant d'alimentation, chacun de ces tronçons étant connecté à l'unité centrale de traitement pour transmettre aux moyens d'entraînement de la palette des signaux de commande propres à chaque tronçon.

L'unité centrale de traitement des données comporte avantageusement au moins un dispositif de commande électronique programmable associé aux tronçons indépendants, chaque tronçon indépendant comportant de préférence au moins un organe pour détecter la position des palettes.

Chaque organe pour détecter la position des palettes comprend, d'une façon avantageuse, au moins un capteur analogique et/ou un capteur de freinage, le passage d'une palette d'un tronçon sur un tronçon adjacent pouvant être détecté par un capteur de passage.

Selon une autre forme de réalisation, chaque platte comporte un premier longeron équipé de deux roues dont au moins une est motrice, un second longeron équipé de deux roues et un plateau monté sur les deux longerons, de telle manière que sa zone centrale soit entièrement dégagée entre les rails du réseau, les deux longerons étant disposés parallèlement à ces rails.

D'une manière avantageuse, l'un des longerons porte un moteur d'entraînement des roues motrices.

La palette comporte de préférence au moins un frein associé à au moins l'une des roues d'entraînement.

Selon un autre mode de réalisation préféré, le plateau est équipé de deux douilles de centrage agencées pour coopérer avec des goupilles de centrage mobiles. Ces goupilles de centrage sont, de préférence, solidaires d'une plate-forme formant une enclume et portée par des supports d'appui fixes, le tronçon correspondant du réseau étant monté sur un support agencé pour être amené dans une position surbaissée par rapport aux tronçons adjacents.

Le support du tronçon peut être associé à au moins un vérin hydraulique ou pneumatique.

Selon un mode de réalisation particulièrement avantageux, l'installation comporte au moins une coulisse mobile verticalement, la palette comportant au moins un organe agencé pour coopérer avec ladite coulisse pour engendrer un signal de détection et/ou de commande.

Les goupilles de centrage sont avantageusement solidaires d'éléments mobiles verticalement, ces éléments comportant chacun une rampe inclinée agencée pour coopérer respectivement avec des coulisseaux destinés à être déplacés horizontalement par un vérin, et portant des plots d'élévation.

De préférence, ces goupilles de centrage ont des têtes de profil différent.

D'une manière avantageuse, chaque palette est associée à un code et au moins un des tronçons comporte des moyens de détection de ce code.

Selon une forme de réalisation particulière, le réseau comporte une structure support portant les rails, réalisée au moyen d'un profilé métallique pourvue de rainures axiales agencées pour recevoir des plots isolants destinés à porter les rails.

La présente invention sera mieux comprise en référence à la description d'un exemple de réalisation et au dessin annexé dans lequel:

La figure 1 représente une vue de dessous, partiellement coupée, d'une forme de réalisation préférée d'une palette telle qu'utilisée dans l'installation selon l'invention,

La figure 2 représente une vue frontale, partiellement coupée de la palette représente par la figure 1, posée sur ses rails,

La figure 3 représente une vue schématique en élévation d'une partie du réseau de rails de l'installation selon l'invention.

Les figures 4A et 4B illustrent un mode d'accès à la face inférieure de la palette et des moyens pour permettre d'appliquer des forces verticales descendantes relativement élevées sur une palette ou les produits qu'elle transporte,

La figure 5 illustre un autre mode d'accès à la face inférieure d'une palette,

Les figures 6A et 6B représentent une forme de réalisation d'une mécanisme de mise en place de plots d'élévation conçus pour soulever une palette à un emplacement déterminé du circuit.

Les figures 7A et 7B illustrent une forme de réalisation avantageuse d'un dispositif élévateur pour transposer les palettes d'un premier niveau à un second niveau,

Les figures 8A et 8B représentent un mode de transfert latéral d'une palette, à un endroit déterminé du circuit, par exemple pour l'amener dans un poste de travail manuel ou automatique, et

La figure 9 illustre une zone tampon ménagée sur le circuit de rails.

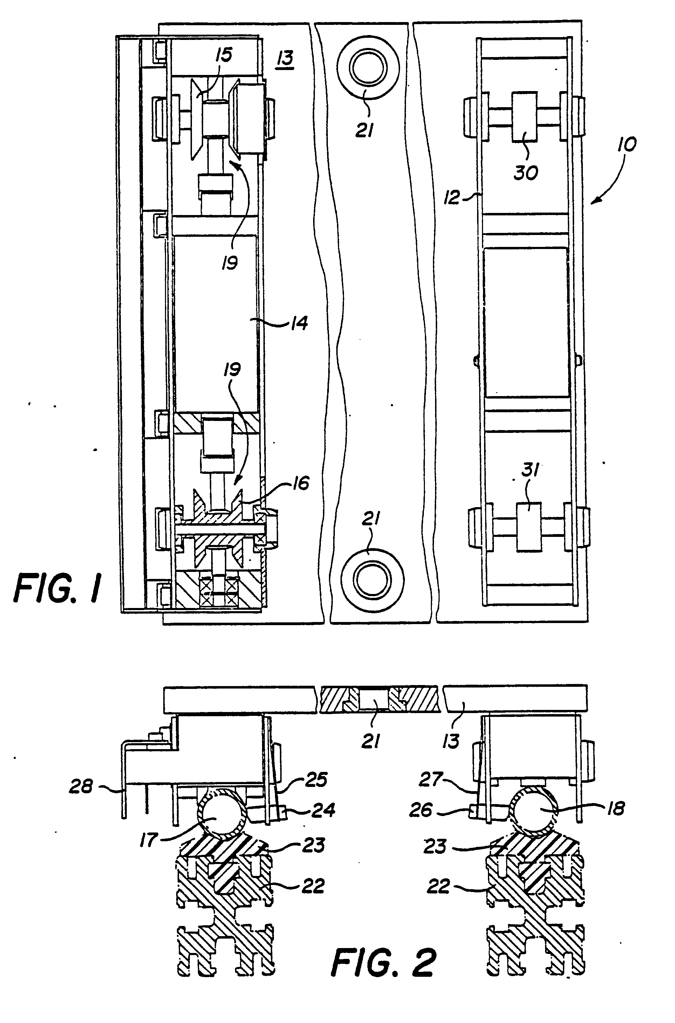

En référence aux figures 1 et 2, une palette 10 se compose essentiellement de deux longerons 11 et 12 pontés par un plateau 13 qui constitue par exemple un support de montage de pièces, ou de transfert de produits ou de pièces d'un poste de travail tel que par exemple un poste de chargement, ves un autre poste de manutention ou d'assemblage ou vers un poste de reprise ou de conditionnement etc... Le longeron 11 porte un moteur électrique 14 du type moteur-frein qui est accouplé à au moins une, mais de préférence aux deux roues 15 et 16 qui sont profilées pour s'adapter aux rails de section circulaires 17 et 18 (voir figure 2). Cet accouplement mécanique entre le moteur 14 et les roues 15 et 16 s'effectue au moyen d'un mécanisme de transmission 19 de type connu en soi et comprenant notamment un renvoi d'angle qui engrène directement un pignon solidaire des axes des roues.

Le moteur-frein 14 ou un frein indépendant mécanique ou électrique (non représenté) est associé aux roues motrices et permet d'arrêter la palette en un endroit déterminé du réseau de rails ou de réduire sa vitesse sur un tronçon déterminé. Deux douilles de centrage 21 sont ménagées dans le plateau 13 pour permettre un indexage précis de la palette dans un poste de travail localisé sur le circuit.

Comme le montre plus particulièrement la figure 2, la partie centrale de la palette est entièrement dégagée sur sa face inférieure et ne comporte dans cette zone que le plateau 13 qui relie les deux longerons 11 et 12. Cette construction a pour avantage de permettre l'accès à la face inférieure de la palette, par exemple comme cela sera expliqué plus en détail par la suite, pour la soutenir au moyen d'une enclume pour toutes les opérations nécissitant l'application d'une force que la structure portant les rails ne serait pas en mesure d'absorber sans risque de déformation.

Cette structure se compose essentiellement de profilés métalliques 22 agencés pour recevoir des plots isolants 23 qui portent les rails 17 et 18.

La palette comporte par ailleurs un premier balai 24 sollicité par un ressort 25 en appui contre le rail 17 et un second balai 26 sollicité par un ressort 27 en appui contre le rail 18. Un carénage 28 est monté sur l'un des côtés de la palette.

La palette comporte par ailleurs deux roues 30 et 31 montées symétriquement aux roues 15 et 16 par rapport à l'axe de la palette.

On constate que le profilé utilisé pour monter la structure de support des rails est très largement évidé pour permettre la réalisation d'un ensemble de supports particulièrement légers. En outre les différents évidements sont conçus pour faciliter la mise en place d'éléments de liaison telles que des barres transversales, etc., ci qui permet la conception d'un réseau adapté à tous les besoins et pouvant être facilement monté et démonté.

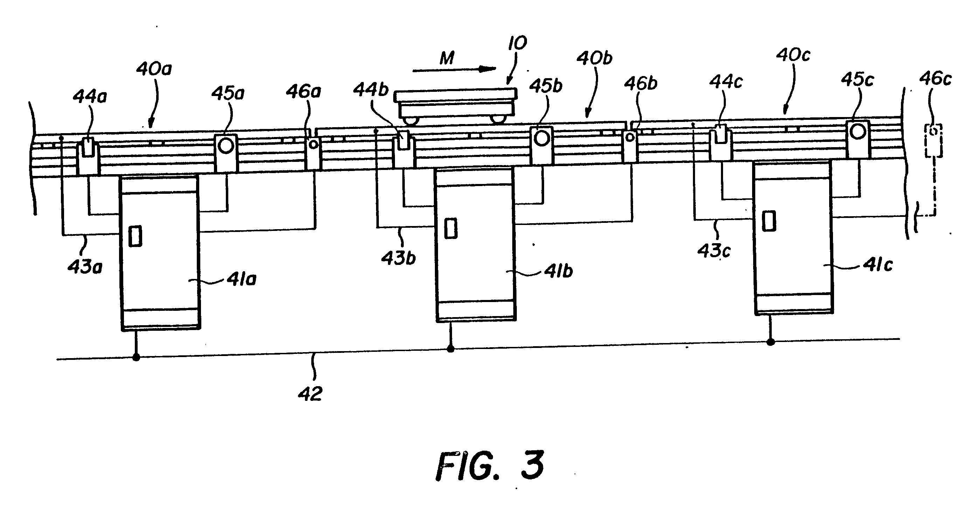

La figure 3 montre essentiellement trois tronçons indépendants 40a, 40b, et 40c du réseau de rails sur lequel circulent des palettes 10 dans le sens de la flèche M. A chacun de ces tronçons indépendants est associé un dispositif de commande électronique programmable respectivement 41a, 41b et 41c. Ces dispositifs de commande électronique représentés comme des unités indépendantes sont en fait des composants de l'unité centrale de traitement et sont de préférence logés dans une armoire de commande commune. L'alimentation de ces circuits est assurée par un câble 42. L'alimentation en puissance des tronçons de rails du réseau est assurée par des câbles de liaison 43a, 43b, et 43c. Par ailleurs à chaque dispositif de commande sont associés un capteur de freinage respectivement 44a, 44b et 44c, un capteur analogique respectivement 45a, 45b et 45c et un capteur de passage d'un tronçon au tronçon suivant respectivement 46a, 46b et 46c. Les capteurs analogiques 45 permettent de détecter la position des palettes avec une précision élevée. Les capteurs analogiques 45 et les capteurs de freinage 44 pourraient être combinés en un seul capteur monté à un emplacement choisi du tronçon.

Il est bien entendu que l'invention n'est pas limitée à la mise en place des capteurs définis ci-dessus. Sur certains tronçons uniquement destinés au transfer des palettes, certains capteurs pourraient être absents ou remplacés par d'autres composants. De façon similaire, plusieurs capteurs du même type pourraient être montés à différents endroits espacés les uns des autres d'un même tronçon du réseau. De tels capteurs pourraient par exemple être prévus dans le cas où l'avance d'une palette doit s'effectuer à des vitesses différentes à certains endroits d'un même tronçon du réseau.

Dans la réalisation illustrée par la figure 3, les capteurs de freinage sont avantageusement destinés à enclencher le freinage des palettes c'est-à-dire à commander le moteur-frein 14 agissant sur les roue 15 et 16 pour réduire la vitesse de déplacement de cette palette, et les capteurs analogiques 45 servent de préférence à provoquer l'arêt d'une palette dans une position parfaitement définie. Cette position correspond en général à un poste de travail manuel ou automasé ou à la prise en charge de la palette par un dispositif assurant son transfert vertical ou latéral en direction d'une bifurcation ménagée sur le réseau ou vers un réseau parallèle.

Lorsque les palettes sont comme mentionné précédemment, alimentées en courant par l'un des rails, une coupure de l'alimentation peut être effectuée par l'unité centrale de traitement ou individuellement pour un ou plusieurs tronçons concernés du réseau, par les dispositifs de commande électronique programmables correspondants. On notera toutefois, que les palettes pourraient également être alimentées en permanence ou pendant des intervalles de temps choisis par une pile ou une batterie montée sur ou sous le plateau 13.

Dans la pratique, une unité de commande électronique gère un tronçon de rail. Toutefois, une même commande peut également gérer plusieurs tronçons de rail.

Lors du passage des palettes d'un tronçon au tronçon suivant, les dispositifs de commande électroniques mettent ces tronçons à la même tension, si nécessaire.

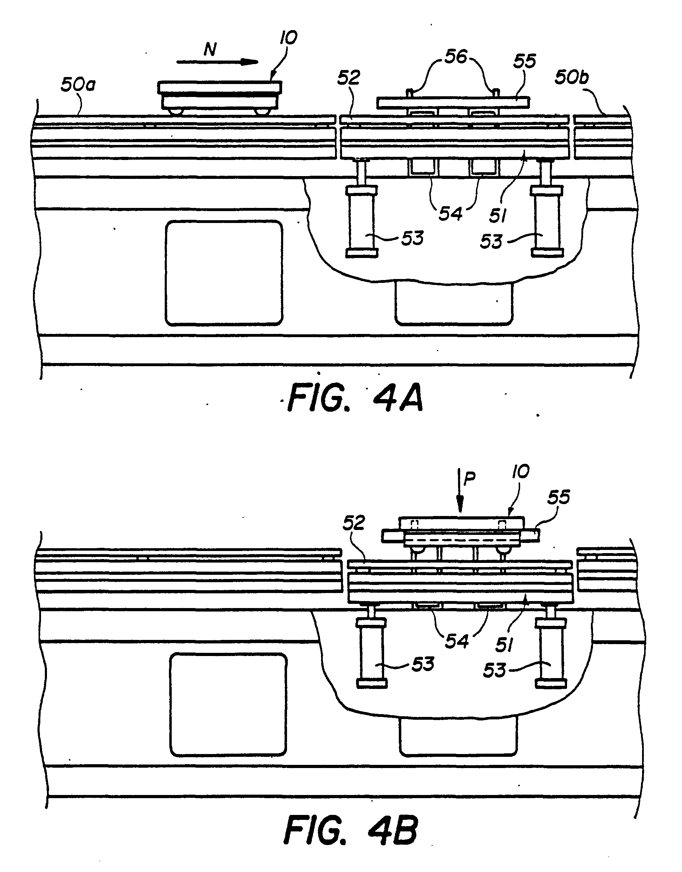

Les figures 4A et 4B illustrent deux phases successives du parcours suivi par une palette 10. Dans l'installation présentée par la figure 4A, la palette 10 circule dans le sens de la flèche N sur un premier tronçon indépendant 50a et s'apprête à s'engager sur un second tronçon indépendant 50b. Sur ce tronçon, la structure 51 conçue pour supporter les rails 52 est associée à deux verins hydrauliques ou pneumatiques 53 agencés pour déplacer cette structure 51 dans une position basse telle que représentée par la figure 4B. La structure porteuse 51 comporte en particulier deux ou quatre plots d'appui 54 supportant une plate-forme 55 équipée de deux goupilles de centrage 56 agencées pour coopérer avec les douilles de centrage 21 ménagées dans le plateau 13 (voir fig. 1) de la palette 10.

Dans la position représentée par la figure 4A, la plate-forme 55 est en position haute. Elle présente une forme et des dimensions telles que la palette 10 puisse venir se positionner par-dessus elle sans être gênée par les goupilles de centrage.

Dans sa position représentée par la figure 4B, la structure 51 portant les rails 52 est amenée par les verins 53 dans sa position basse.

Comme les plots d'appui portant la plate-forme 55 sont fixes en hauteur, le fait que la structure portante 51 soit abaissée a pour conséquence le dépôt de la palette 10 sur la plate-forme 55 dans une position définie par les goupilles de centrage 56. Dans cette position, la charge de la palette 10 et toutes les forces exercées dans le sens de la flèche P sur le plateau 13 ou sur des pièces déposées sur ce plateau sont intégralement supportées par les plots d'appui 54. En conséquence, comme aucune contrainte importante ne s'exerce sur les rails ou la structure portante 51, cette structure peut être relativement légère donc facile à mettre en place et à transformer.

On notera toutefois que cette caractéristique particulièrement avantageuse de l'installation décrite est obtenue essentiellement grâce au fait que la partie centrale de la face inférieure de la palette 10 est complétement dégagée et permet l'accès de différents organes tels que, dans le présent cas, des plots d'appui 54, et à l'utilisation de rails fixes montés sur une structure tubulaire pour la construction du réseau.

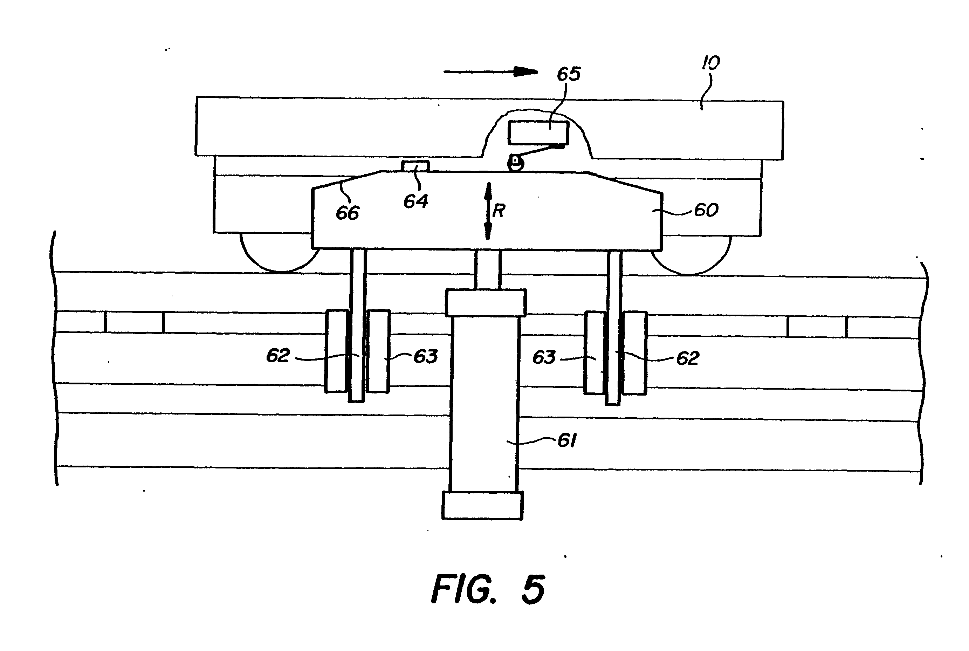

La figure 5 illustre un autre avantage issu de cette même caractéristique constructive de la palette 10. Sur l'un des tronçons indépendant du réseau de rails, l'installation peut être équipée d'une coulisse 60 mobile en translation dans le sens de la double flèche R, actionnée par un vérin hydraulique ou pneumatique 61 et guidé par deux colonnes 62 mobiles dans des manchons fixes 63. La coulisse 60 peut porter un détecteur 64 de type quelconque, par exemple optique, mécanique ou électronique, destiné à coopérer avec un composant (non représenté) porté par la palette 10 et destiné à agir sur les moyens de commande de cette dernière. Un interrupteur 65 également porté par la palette 10 peut coopérer avec la rampe 66 de la coulisse 60 pour transmettre un signal de commande au circuit électronique 29 (voir fig. 1) porté par le longeron 12 de la palette 10. Cet interrupteur peut par exemple servir à couper l'alimentation du moteur d'entraînement peut par exemple servir à couper l'alimentation du moteur d'entraînement de la palette ou à déclencher un signal de freinage etc...

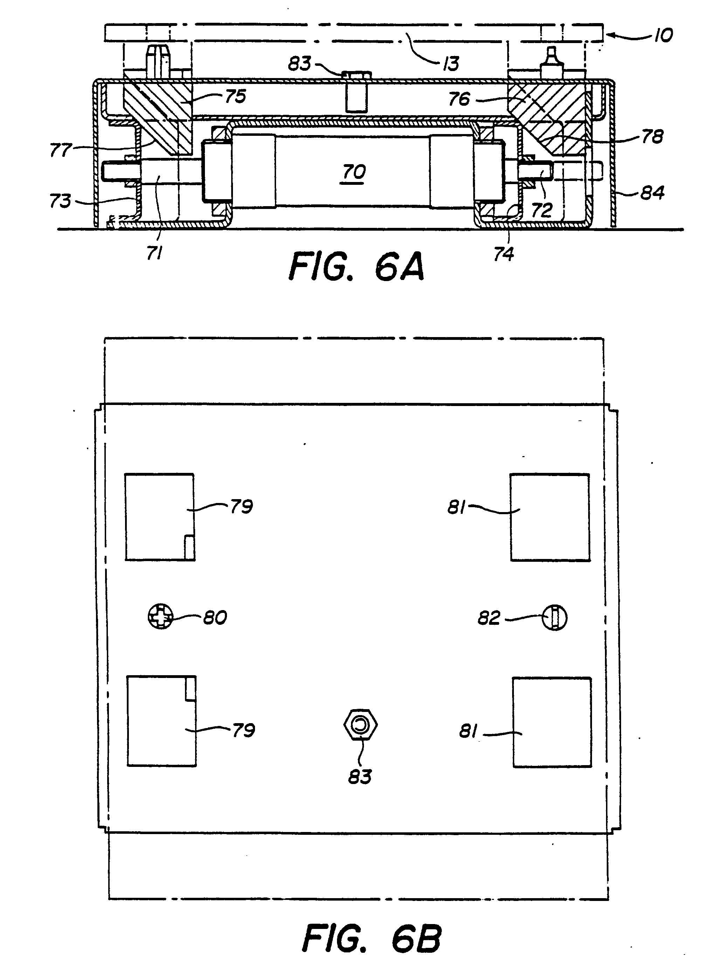

Les figures 6A et 6B illustrent un mécanisme autre que celui des figures 4A et 4B pour mettre en place des plots d'appui conçus pour prendre en charge le plateau 13 d'une palette 10 et d'effectuer sur ce plateau des opérations au cours desquelles des forces plus ou moins importantes seront appliquées sur le plateau ou sur les pièces qu'il transporte. Ce mécanisme se compose essentiellement d'un vérin 70 disposé horizontalement pourvu de deux tiges mobiles 71 et 72 respectivement solidaires de deux coulisseaux 73 et 74 conçus pour agir respectivement sur deux éléments transversaux 75 et 76, et plus particulièrement sur les rampes de glissement 77 et 78, disposées, par exemple, à 45° et solidaires de ces éléments. L'élément 75 est solidaire des plots d'élévation 79 et de la goupille de centrage 80 alors que l'élément 76 porte les plots d'élévation 81 et la goupille de centrage 82. Les deux goupilles de centrage 80 et 82 ont des têtes de profil différent, ce qui permet non seulement un positionnement précis des palettes mais autorise en outre de contrôler l'orientation de ces palettes sur le réseau de rail. Un détecteur 83 est monté dans la paroi supérieure d'un boîtier 84 recouvrant l'ensemble du mécanisme décrit ci-dessus. Ce détecteur est conçu pour coopérer avec un composant (non représenté), monté à la face inférieure du plateau 13 de la palette 10.

Le dispositif décrit est représenté en référence aux figures 6A et 6B permet en outre un indexage de haute précision des palettes 10. Un tel indexage est souvent requis lorsque les palettes servent ju transfert de différentes pièces destinées à être assemblées dans différents postes de montage automatisés.

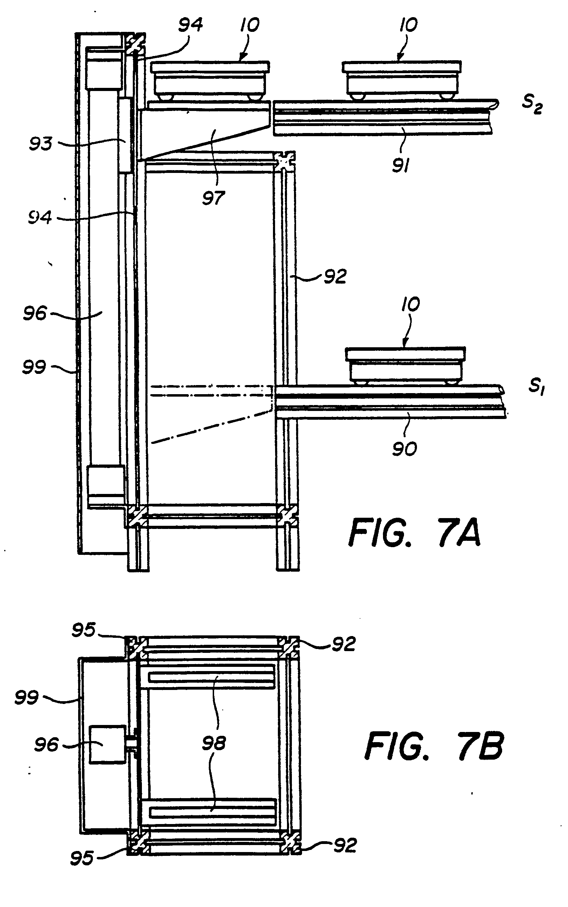

Les figures 7A et 7B illustrent un dispositif élévateur agencé pour amener des palettes 10 d'un premier tronçon de réseau 90 dont les rails de trouvent à un niveau S1 sur un deuxième tronçon 91 dont les rails se trouvent à un niveau S2 ou inversément. A cet effet, l'installation comporte un support 92 réalisé au moyen des profilés illustrés en par la figure 2, un plaque 93 coulissant au moyen de patins 94 dans des rainures appropriées des deux colonnes latérales 95 et un vérin hydraulique ou pneumatique ou un treuil ou tout autre mécanisme approprié pour déplacer un chariot mobile 97 solidaire de la plaque coulissante 93. Deux tronçons de rails 98 sont montés sur le chariot mobile 97 pour permettre le déplacement des palettes 10 et leur passage sur les rails des tronçons 90 et 91, lorsque le chariot 97 est amené soit au niveau S1 soit au niveau S2.

Un capot de protection 99 est monté à l'arrière du support ou de la colonne du dispositif élévateur pour protéger le treuil ou le vérin 96.

Etant donné que les tronçons du réseau sont totalement indépendants, le tronçon supérieur 91 et le tronçon inférieur 90 ne nécessitent aucune liaison électrique ni aucun lien mécanique. En outre, les niveaux S1 et S2 peuvent être quelconques, étant donné que la seule contrainte consiste à programmer le mécanisme de commande du chariot mobile 97 en fonction de ces niveaux. Bien que seuls deux niveaux S1 et S2 soient représentés sur cette figure, il est bien évident que l'on pourrait prévoir toute une série de niveaux intermédiaires et de réaliser un dispositif de tri manuel ou automatique pour répartir les palettes entre les tronçons correspondant aux différents niveaux selon un codage préétabli.

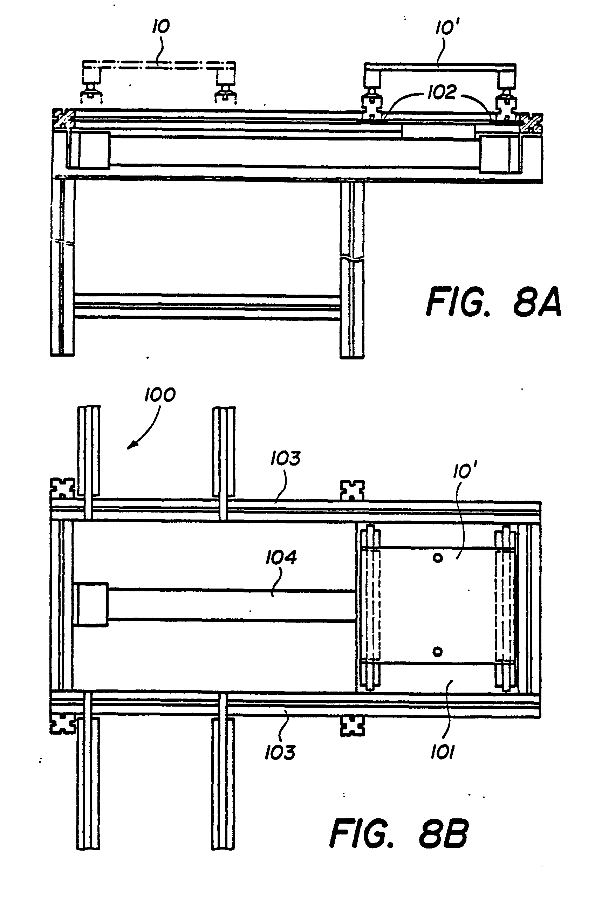

Les figures 8A et 8B illustrent des moyens pour transférer latéralement des palettes par exemple dans un poste de travail manuel décalé par rapport à la direction générale du réseau. Une palette 10 provenant d'un tronçon de réseau 100 peut être momentanément amenée dans la position 10', décalée par rapport à l'axe du tronçon 100, dans un poste de travail manuel. A cet effet, l'installation comporte une plaque support coulissante 101 mobile sur des patins de glissement 102 agencés pour coulisser dans une rainure latérale de deux transverses 103, par exemple découpée dans le profilé métallique utilisé pour réaliser l'ensemble de la structure portant les rails. Cette plaque support coulissante peut être actionnée par un vérin hydraulique ou pneumatique 104 ou par tout autre mécanisme tel que par exemple un système de chaîne entraîné par un moteur etc...

Il est bien entendu que ce dispositif de transfert latéral n'est pas limité à la forme de réalisation décrite et illustrée. En effet, la plaque support coulissante pourrait être utilisée pour effectuer un tri de palettes en prenant successivement en charge les palettes provenant d'un tronçon d'entrée et en les distribuant sélectivement sur différents tronçons de sortie (non représentés).

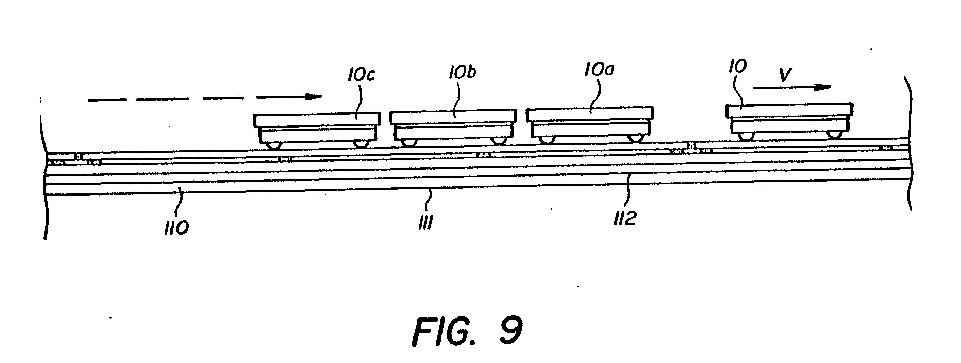

La figure 9 illustre une zone tampon réalisée sur un tronçon de réseau 110 intercalé entre deux tronçons de réseau 111 et 112 indépendants les uns des autres. Plusieurs palettes 10a, 10b et 10c peuvent être momentanément stockées sur le tronçon 110 formant ladite zone tampon. A tous moments les palettes momentanément arrêtées peuvent être remises en marche et évacuées dans le sens de la flèche V via le tronçon d'évacuation 111.

La description ci-dessus a permis d'illustrer quelques unes des formes de réalisation de l'installation selon l'invention. Toutefois, grâce au caractère modulaire, et à la souplesse avec laquelle les différents composants peuvent être utilisés, de nombreuses autres formes de réalisation pourraient être envisagées. En particulier on pourrait réaliser des combinaisons de différents montages élémentaires représentés par les figures.

Les tronçons de lignes peuvent avoir des longueurs différentes selon les besoins. Des zones tampons relativement peu encombrantes, en forme de spirale pourraient être réalisées pour permettre un stockage momentané des palettes. Ces dernières pourraient être codées afin qu'elles puissent être triées et suivre une trajectoire déterminée en fonction de leur code.

Un autre avantage important de cette installation est que contrairement aux systèmes existants, la consommation d'énergie des palettes est quasiment nulle lorsque celles-ci sont à l'arrêt. En effet chaque palette est commandée individuellement et peut être avancée, reculée ou arrêtée selon les besoins de l'utilisteur, en fonction d'un programme pré-établi.

Enfin l'un des avantages les plus marquants résulte la possibilité d'accès à la surface inférieure du plateau des palettes, accès qui est lié d'une part à l'utilisation de rails et d'autre part à la construction des palettes elles-mêmes. Cet accès permet notamment l'utilisation de différents détecteurs ou organes générateurs de signaux de commande montés sur le réseau ou sur les palettes et susceptibles d'intervenir sur le cheminement des palettes.

Par ces différents artifices, il est possible d'exercer un contrôle précis et permanent de toutes les palettes et d'intervenir, si nécessaire, à tout moment.

Si pour un raison quelconque, la cadence d'intervention dans un poste manuel ne suit pas la cadence des autres postes de travail, il est possible d'improviser une zone tampon sur un tronçon déterminé du réseau ou de dériver les palettes sur un réseau parallèle.

**Revendications**

1. Installation modulaire pour le transport contrôlé de pièces ou de produits dans une ligne de fabrication, de montage ou de conditionnement, comprenant un réseau de rails et au moins une palette 10 agencée pour circuler sur ce réseau, dans laquelle ladite palette est autonome et comporte des moyens d'entraînement propres (14) et dans laquelle le réseau de rails comporte plusieurs tronçons indépendants (40a, 40b, 40c) composés d'un premier élément de rail (17) et d'un second élément de rail (18) parallèle au premier, caractérisée en ce qu'elle est équipée d'une unité centrale de traitement des données pour élaborer des signaux de commande à transmettre auxdits moyens d'entraînement (14) de ladite palette (10), et en ce que lesdits premier et second éléments (17, 18) sont conçus pour véhiculer à la fois lesdits signaux de commande et le courant d'alimentation, chacun des ces tronçons étant connecté à l'unité centrale de traitement pour transmettre aux moyens d'entraînement (14) de la palette des signaux de commande propres à chaque tronçon.

2. Installation selon la revendication 1, caractérisée en ce que l'unité centrale de traitement comporte au moins un dispositif de commande électronique programmable (41a, 41b, 41c) associé aux tronçons indépendants (40a, 40b, 40c).

3. Installation selon la revendication 1, caractérisée en ce que chaque tronçon indépendant comporte au moins un organe pour détecter la position des palettes.

4. Installation selon la revendication 3, caractérisée en ce que chaque organe pour détecter la position des palettes comprend au moins un capteur analogique (45a, 45b, 45c) et/ou un capteur de freinage (44a, 44b, 44c).

5. Installation selon la revendication 1, caractérisée en ce qu'elle comporte au moins un capteur de passage (46a, 46b, 46c) agencé pour détecter le passage d'une palette d'un tronçon (40a, 40b, 40c) sur un tronçon adjacent.

6. Installation selon la revendication 1, caractérisée en ce que chaque palette (10) comporte un premier longeron (11) équipé de deux roues (15, 16) dont au moins une est motrice, un second longeron (12) équipé de deux roues (30, 31) et un plateau (13) monté sur les deux longerons, de telle manière que sa zone centrale soit entièrement dégagée entre les rails du réseau, les deux longerons étant disposés parallèlement à ces rails.

7. Installation selon la revendication 6, caractérisée en ce que l'un (11) des longerons porte un moteur d'entraînement (14) des roues motrices.

8. Installation selon la revendication 6, caractérisée en ce que la palette comporte au moins un frein associé à au moins l'une des roues d'entraînement (15).

9. Installation selon la revendication 6, caractérisée en ce que le plateau (13) est équipé de deux douilles de centrage agencées pour coopérer avec des goupilles de centrage mobiles (56, 80, 82).

10. Installation selon la revendication 9, caractérisée en ce que les goupilles de centrage sont solidaires d'une platforme (55) formant une enclume et portée par des supports d'appui fixes (54), et en ce que le tronçon (51) correspondant du réseau est monté sur un support agencé pour être amené dans une position surbaissée par rapport aux tronçons adjacents.

11. Insallation selon la revendication 10, caractérisée en ce que le support du tronçon (51) est associé à au moins un vérin hydraulique ou pneumatique (53).

12. Installation selon la revendication 1, caractérisée en ce qu'elle comporte au moins une coulisse (60) mobile verticalement et en ce que la palette (10) comporte au moins un organe agencé pour coopérer avec ladite coulisse pour engendrer un signal de détection et/ou de commande.

13. Installation selon la revendication 9, caractérisée en ce que les goupilles de centrage (80, 82) sont solidaires d'éléments (75, 76) mobiles verticalement, ces éléments comportant chacun une rampe inclinée (77, 78) agencée pour coopérer respectivement avec des coulisseaux (73, 74) destinés à être déplacés horizontalement par un vérin (70).

14. Installation selon la revendication 13, caractérisée en ce que les éléments (75, 76) portant des plots d'élévation (78, 80).

15. Installation selon la revendication 14, caractérisée en ce que les goupilles de centrage (81, 82) ont des têtes de profil différent.

16. Installation selon la revendication 1, caractérisée en ce que chaque palette est associée à une code et en ce que au moins un des tronçons comporte dees moyens de détection de ce code.

17. Installation selon la revendication 1, caractérisée en ce que le réseau comporte une structure support portant les rails, réalisée au moyen d'un profilé métallique (22) pourvue de rainures axiales, agencées pour recevoir des plots isolants (23) destinés à porter les rails.

**Patentansprüche**

1. Modular aufgebaute Installation zum kontrollierten Transport von Teilen oder Erzeugnissen auf einer Straße zur Fertigung, Montage oder Verpackung, bestehend aus einem Schienennetz und mindestens einer Palette (10), die dazu dient, sich auf diesem Netz zu bedienen, wobei die Palette autonom ist und eigene Antriebseinrichtungen (14) aufweist, und wobei das Schienennetz mehrere unabhängige Abschnitte (40a, 40b, 40c) aufweist, bestehend aus einem ersten Schienenelement (17) und einem zum ersten parallelen zweiten Schienenelement (18), dadurch gekennzeichnet, daß sie mit einer zentralen Datenverarbeitungseinheit ausgestattet ist, um an die Antriebseinrichtungen (14) der Palette (10) abzugebende Steuersignale auszuarbeiten, und daß die ersten und zweiten Elemente (17, 18) so beschaffen sind, daß sie gleichzeitig zur Übertragung der Steuersignale und zur Stromversorgung dienen, wobei jeder dieser Abschnitte an die zentrale Bearbeitungseinheit angeschlossen ist, um für jeden Abschnitt eigene Steuersignale an die Antriebseinrichtungen (14) der Palette zu übertragen.

2. Installation nach Anspruch 1, dadurch gekennzeichnet, daß die zentrale Datenverarbeitungseinheit mindestens eine mit den unabhängigen Abschnitten (40a, 40b, 40c) verbundene programmierbare elektronische Steuereinrichtung (41a, 41b, 41c) aufweist.

3. Installation nach Anspruch 1, dadurch gekennzeichnet, daß jeder unabhängige Abschnitt mindestens ein Organ zum Anzeigen der Position der Paletten aufweist.

4. Installation nach Anspruch 3, dadurch gekennzeichnet, daß jedes Organ zum Anzeigen der Stellung der Paletten mindestens einen Analogsensor (45a, 45b, 45c) und/oder einen Bremssensor (44a, 44b, 44c) aufweist.

5. Installation nach Anspruch 1, dadurch gekennzeichnet, daß sie mindestens einen Übergangssensor (46a, 46b, 46c) aufweist, der dazu dient, den Übergang einer Palette von einem Abschnitt (40a, 40b, 40c) auf einen benachbarten Abschnitt anzuzeigen.

6. Installation nach Anspruch 1, dadurch gekennzeichnet, daß jede Palette (10) einen ersten Längsträger (11) mit zwei Rädern (15, 16) aufweist, wovon mindestens eines angetrieben ist, des weiteren einen mit zwei Rädern (30, 31) versehenen zweiten Längsträger (12) und eine auf den zwei Längsträgern so montierte Arbeitsplatte (13), daß ihr zwischen den Schienen des Netzes liegender Bereich vollkommen frei ist, wobei die zwei Längsträger parallel zu diesen Schienen angeordnet sind.

7. Installation nach Anspruch 6, dadurch gekennzeichnet, daß einer der Längsträger (11) einen Motor (14) zum Antrieb der Triebräder trägt.

8. Installation nach Anspruch 6, dadurch gekennzeichnet, daß die Palette mindestens eine mit mindestens einem der Antriebsräder (15) verbundenen Bremse aufweist.

9. Installation nach Anspruch 6, dadurch gekennzeichnet, daß die Arbeitsplatte (13) mit zwei Zentrierbuchsen ausgestattet ist, die mit beweglichen Zentrierstiften (56,80 82) zusammenarbeiten sollen.

10. Installation nach Anspruch 9, dadurch gekennzeichnet, daß die Zentrierstifte mit einer, einen Amboß bildenden Plattform (55) verbunden und von stationären Abstützböcken (54) getragen sind, und daß der entsprechende Netzabschnitt (51) so auf einer Abstützung montiert ist, daß man ihn in eine bezüglich der benachbarten Abschnitte abgesenkte Position bringen kann.

11. Installation nach Anspruch 10, dadurch gekennzeichnet, daß die Abstützung des Abschnittes (51) mit mindestens einem hydraulischen oder pneumatischen Zylinder (53) verbunden ist.

12. Installation nach Anspruch 1, dadurch gekennzeichnet, daß sie mindestens eine vertikal bewegliche Kulisse (60) aufweist, und daß die Palette (10) mindestens ein Organ aufweist, das mit der Kulisse zusammenarbeitet, um eine Signal für eine Anzeige und/oder einen Steuerbefehl zu erzeugen.

13. Installation nach Anspruch 9, dadurch gekennzeichnet, daß die Zentrierstifte (80, 82) fest mit vertikalbeweglichen Elementen (75, 76) verbunden sind, wobei jedes dieser Elemente eine schräge Rampe (77, 78) aufweist, die dazu dient, jeweils mit Gleitstücken (73, 74) zusammenzuarbeiten, die man bestimmungsgemäß durch einen Arbeitszylinder (70) verschiebt.

14. Installation nach Anspruch 13, dadurch gekennzeichnet, daß die Elemente (75, 76) Hubklötze (79, 81) tragen.

15. Installation nach Anspruch 14, dadurch gekennzeichnet, daß die Zentrierstifte (81, 82) Köpfe mit unterschiedlichem Profil aufweisen.

16. Installation nach Anspruch 1, dadurch gekennzeichnet, daß jede Palette mit einem Code versehen ist, und daß mindestens einer der Abschnitte Einrichtungen zum Erkennen dieses Codes aufweist.

17. Installation nach Anspruch 1, dadurch gekennzeichnet, daß das Schienennetz einen die Schienen tragenden Unterbau aufweist, der in einem Metallprofil (22) ausgeführt ist, das mit axialen Rillen versehen ist, die dazu dienen, die als Träger für die Schienen vorgesehenen Isolierklötze (23) aufzunehmen.

## Claims

1. Modular installation for controlled transport of parts or products in a production, assembly or processing line including a rail network and at least one pallet adapted for circulation on said network, in which said pallet is autonomous and includes its own traction mechanism and in which the rail network includes several independent sections (40a, 40b, 40c) composed of a first rail element (17) and a second rail element (18) parallel to the first, characterized in that the installation is equipped with a central data processing unit for developing control signals to be transmitted to said traction mechanism (14) of said pallet (10) and in that said first and second elements (17, 18) are designed to convey both said control signals and the feed current, each of these sections being connected to the central processing unit for transmitting to the traction mechanism (14) of the pallet control signals corresponding to each section.

2. Installation according to Claim 1, characterized in that the central processing unit includes at least one programmable electronic control unit (41a, 41b, 41c) associated with the independent sections (40a, 40b, 40c).

3. Installation according to Claim 1, characterized in that each independent section includes at least one device for detecting the position of the pallets.

4. Installation according to Claim 3, characterized in that each device for detecting the position of the pallets includes at least one analog sensor (45a, 45b, 45c) and/or a braking sensor (44a, 44b, 44c).

5. Installation according to Claim 1, characterized in that it includes at least one passage sensor (46a, 46b, 46c) adapted to detect the passage of a pallet from one section (40a, 40b, 40c) to an adjacent section.

6. Installation according to Claim 1, characterized in that each pallet (10) includes a first girder equipped with two wheels (15, 16) of which at least one is a driving wheel, a second girder (12) equipped with two (30, 31) and a plate (13) mounted on the two girders in such a manner that its central zone is entirely free between the rails of the network, the two girders being disposed parallel to these rails.

7. Installation according to Claim 6, characterized in that one (11) of the girders carries a motor (14) for propelling the driving wheels.

8. Installation according to Claim 6, characterized in that the pallet includes at least one brake associated with a least one of the driving wheels (15).

9. Installation according to Claim 6, characterized in that the plate (13) is equipped with two centring sockets adapted to cooperate with mobile centring pins (56, 80, 82).

10. Installation according to Claim 9, characterized in that the centring pins are solid with a platform (55) forming an anvil and carried by fixed bearing supports (54), and in that the corresponding section (51) of the network is mounted on a support adapted to be brought into a surbased position with respect to the adjacent sections.

11. Installation according to Claim 10, characterized in that the support of the section (51) is associated with at least one hydraulic or pneumatic jack (53).

12. Installation according to Claim 1, characterized in that it includes at least one vertically mobile slide (60) and in that the pallet (10) includes at least one device adapted to cooperate with said slide to generate a detection and/or control signal.

13. Installation according to Claim 9, characterized in that the centring pins (80, 82) are solid with vertically mobile elements (75, 76), these elements each including an inclined ramp (77, 78) adapted to cooperate respectively with slides (73, 74) arranged for horizontal displacement by a jack (70).

14. Installation according to Claim 13, characterized in that the elements (75, 76) carry elevating blocks (78, 80).

15. Installation according to Claim 14, characterized in that the centring pins (81, 82) have heads with different profiles.

16. Installation according to Claim 1, characterized in that each pallet is associated with a code and in that at least one of the sections includes means for detecting this code.

17. Installation according to Claim 1, characterized in that the network includes a support structure carrying the rails, made by means of a metallic profiled section (22) provided with axial grooves adapted to receive insulating blocks (23) for carrying the rails.

FIG. I

FIG. 2

FIG. 3

FIG. 4A

FIG. 4B

FIG. 5

FIG. 6A

FIG. 6B

5

FIG. 7A

FIG. 7B

FIG. 8A

FIG. 8B

FIG. 9

EP 0 229 788 B1